# FASCICULE DE BREVET EUROPEEN

(11) **EP 1 032 817 B1**
(45) Date de publication et mention de la délivrance du brevet: **20.02.2002**
(21) Numéro de dépôt: 98955666.7
(22) Date de dépôt: 16.11.1998
(51) Int. Cl.: G01N 15/12

(54) **DISPOSITIF AUTOMATIQUE COMPTEUR ANALYSEUR D'HEMATOLOGIE**
AUTOMATISCHE HÄMATOLOGISCHE ZÄHL-UND MESSVORRICHTUNG
AUTOMATIC HEMATOLOGIC COUNTING AND ANALYSING DEVICE

(30) Priorité: 19.11.1997 FR 9714520
(43) Date de publication de la demande: 06.09.2000
(73) Titulaire: Melet, François, 95528 Cergy Pontoise Cedex (FR)
(72) Inventeur: Melet, François, 95528 Cergy Pontoise Cedex (FR)
(74) Mandataire: Rinuy, Santarelli
(86) Numéro de dépôt international: FR9802440
(87) Numéro de publication internationale: WO9926056

(56) Documents cités:
- EP-A- 0 508 495
- WO-A-95/18962
- US-A- 4 729 876

## Description

La présente invention concerne un dispositif automatique compteur analyseur d'hématologie. Plus précisément, il s'agit d'un dispositif permettant notamment d'effectuer automatiquement la mesure des plaquettes, des globules rouges, des globules blancs et de l'hémoglobine dans le sang.

On connaît déjà un tel dispositif, le brevet français n° 2 629 208 décrit un analyseur hématologique automatique. Ce dispositif, bien que déjà simplifié, demeure relativement complexe. Cette complexité entraîne qu'un tel dispositif est nécessairement volumineux, en outre son coût de fabrication est élevé.

Le document WO-A-95 18962 décrit du dispositif d'hématologie comprenant un ensemble de pompage comportant une pompe à air commandée par un moteur et deux pompes de diluant et de prélèvement en relation avec une cuve où la mesure est réalisée à l'aide d'un tube de mesure et une quatrième pompe, de lyse, complètement séparée des pompes précédentes.

L'invention a pour but de remédier à ces difficultés en réduisant le nombre de pièces utiles à sa réalisation et en concevant une organisation qui minimise le volume du dispositif. Le dispositif de l'invention est de taille très compacte. Sa particularité est avant tout sa compacité face à des performances élevées d'analyse, de stockage, et de traitement des mesures hématologiques réalisées. Pour aboutir à un tel concept chaque ensemble et sous-ensemble a été longuement étudié en vue d'une optimisation poussée des principes mécaniques de dilution et d'acquisition de cet analyseur.

Le principe du fonctionnement du dispositif de l'invention est décrit en détail dans le brevet français n° 2 629 208, dont la description est incorporée ici par référence.

Plus précisément l'invention conceme un dispositif automatique compteur analyseur d'hématologie caractérisé par son organisation en trois ensembles : un ensemble de pompage comportant une pompe à air commandée par un premier moteur et trois pompes respectivement de lyse, de diluant et de prélèvement actionnées par un second moteur, un ensemble de dilution comportant trois cuves respectivement de déchets, de première dilution pour les blancs, et de deuxième dilution pour les rouges et un ensemble de mesure comportant une chambre de mesure.

Le regroupement judicieux des différents éléments constituant le dispositif permet de minimiser le volume nécessaire.

Le bloc de mesure du dispositif ne comporte qu'une seule chambre de mesure permettant d'effectuer le comptage des plaquettes, des globules rouges et des globules blancs.

En n'utilisant qu'une seule chambre de mesure, on arrive à baisser le coût de revient du dispositif et on diminue le volume du dispositif.

Le dispositif comprenant un ensemble de vannes comporte avantageusement une vanne permettant d'utiliser de l'eau à la place d'un diluant isotonique. Un rinçage à l'eau distillée permet de mettre l'appareil en veille sans qu'il n'y ait un risque de cristallisation due aux sels présents dans le diluant.

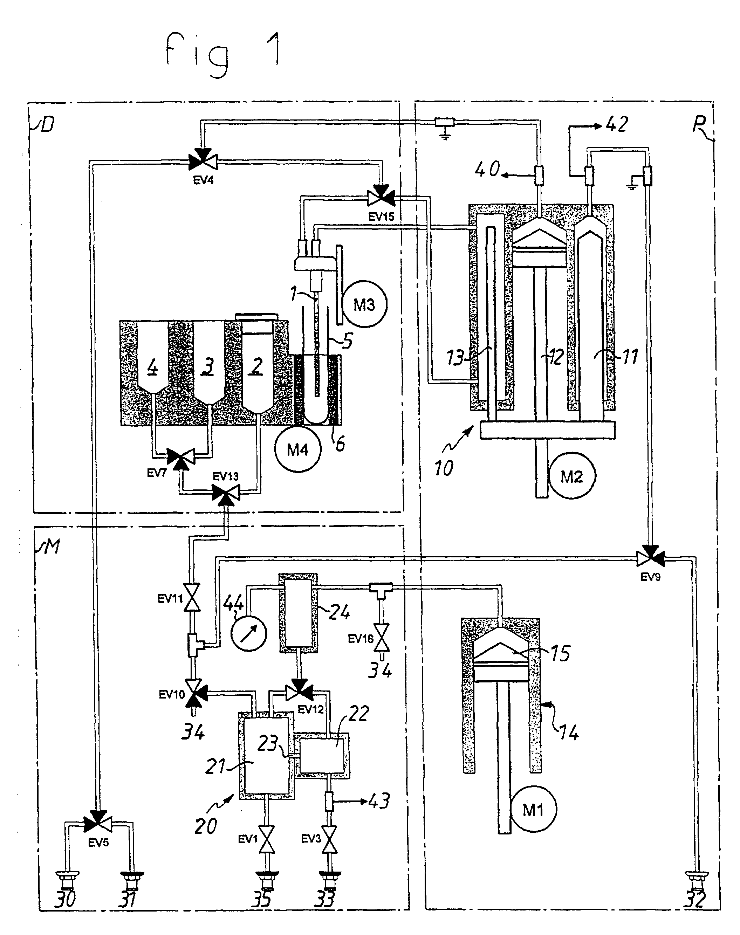

Les caractéristiques et avantages de l'invention ressortiront d'ailleurs de la description qui va suivre, à titre d'exemple, en référence à la figure schématique annexée sur laquelle les interconnexions fluidiques du dispositif sont représentées.

Suivant la forme de réalisation choisie et représentée, le dispositif de l'invention permet de réaliser des mesures hématologiques.

Le dispositif de l'invention comporte un ensemble de pompage P, un ensemble de dilution D et un ensemble de mesure M. Un ensemble d'électrovannes et de conduits mettent en relation les ensembles précédents. Le dispositif comporte également un ensemble électronique d'amplification et d'acquisition des impulsions électriques ainsi que différents périphériques de saisie de données (tels que lecteur code-à-barres, clavier PC externe, etc...), de visualisation, d'édition et de transmission des résultats.

L'ensemble dilution comporte un dispositif de prélèvement du sang comprenant une aiguille à prélèvement 1 pilotée par un moteur M3 de Montée/Descente et un ensemble de cuves, respectivement de déchets 2, de dilution blancs 3 et de deuxième dilution rouges 4, piloté en translation par un moteur M4. Un tube de prélèvement 5 est disposé dans un porte tube 6.

L'ensemble pompe comporte une pompe 10 à trois pistons 11, 12 et 13 pilotée par un moteur M2. Le piston de lyse 11 de taille moyenne, relié à une électrovanne EV9, assure la distribution de l'agent de lyse utile à la mesure des Leucocytes. Le piston diluant 12 relié à une électrovanne EV4 assure la distribution du diluant nécessaire à la dilution du sang. Le piston 13 est un micro-piston qui est directement relié à l'aiguille de prélèvement 1 et qui sert au prélèvement du sang par différence de volume. Une pompe à air 14 comportant un piston 15 est commandée par un moteur M1 et actionne l'ensemble de mesure.

L'ensemble de mesure comporte un vase d'expansion 24 relié à la pompe à air 14 et une chambre de mesure 20 comprenant une chambre principale 21, reliée à une vanne EV1, et une chambre latérale 22 reliée à la vanne EV3. Entre ces deux chambres est réalisé un micro-orifice 23 appelé aussi orifice de comptage.

Un ensemble de conduits et un ensemble d'électrovannes assurent le raccord des différentes parties susceptibles de coopérer.

Les conduits sont alimentés par des sources de diluant 30, d'eau 31, de lyse 32, de transflux 33 et d'air 34. Une sortie 35 est prévue pour la vidange. Des dispositifs contrôlent le niveau respectif du diluant en 40, de la lyse en 42 et du transflux en 43. Le contrôle de la pression de l'air est réalisé par un dispositif 44.

Les électrovannes jouent un rôle de logique de communication entre les différentes parties du dispositif.

Un premier sous-ensemble d'électrovannes sert à la commutation de liquides ; ainsi l'électrovanne EV1 sert de vanne de vidange générale, EV3 sert de vanne d'amorçage du transflux dans la cuve latérale, EV4 est une électrovanne d'aspiration et de distribution du diluant ou de l'eau, EV5 sert à la sélection du diluant ou de l'eau, EV11 gère l'ensemble du transfert des cuves de l'ensemble de dilution. EV9 sert à la distribution de lyse, EV13 et EV7 servent à la sélection des cuves de l'ensemble de dilution à transférer. EV15 permet la distribution du diluant par l'aiguille à prélèvement pour le rinçage de l'aiguille ou par l'extérieur de l'aiguille pour la première partie de la dilution ou le rinçage de la partie externe de l'aiguille.

Un second sous-ensemble d'électrovannes sert à la commande des circuits d'air ; ainsi EV12 sert à sélectionner l'aspiration de la pompe à air, et EV16 permet d'effectuer une mise à l'atmosphère de la pompe à air.

EV10 permet l'arrivée de l'air et le transfert de liquide. Cette électrovanne est utilisée pour la phase de comptage.

Une particularité intéressante et fondamentale du concept est la capacité du bloc de dilution à remplacer le diluant isotonique (9 pour 1000) par de l'eau distillée grâce à EV5. En effet cette eau distillée permettra un rinçage en vue d'une mise en veille sans risque de cristallisation due aux sels du diluant.

Un appareil basé sur cette organisation a pu être réalisé dans un volume limité à 33 cm en hauteur, 21 cm en largeur et 24 cm en profondeur, tous équipements périphériques compris.

Le fonctionnement du dispositif va maintenant être exposé. On suppose que les cycles d'amorçage ont été effectués et les réactifs sont correctement amorcés. On insère le tube de prélèvement contenant du sang à analyser dans le porte tube et on pousse l'ensemble de cuves dans l'appareil. Sous l'action du moteur M4, le tube de prélèvement se positionne sous l'aiguille de prélèvement.

On effectue alors la phase de dilution. On fait descendre l'aiguille de prélèvement dans le tube de prélèvement grâce à l'action du moteur M3.

Sous l'action du moteur M2, on aspire la quantité de sang voulue par retrait du micro-piston 13. On amène ainsi une quantité de diluant proportionnellement au déplacement du piston diluant 12 : ce faisant on contrôle en permanence la présence du diluant par le dispositif de contrôle 40. On dégage l'aiguille de prélèvement du sang en la faisant remonter par l'action du moteur M3. On aspire alors une quantité complémentaire de diluant par l'action du moteur M2 : on contrôle toujours la présence du diluant par le dispositif 40. Ce diluant complémentaire permet d'avoir la quantité nécessaire à la dilution et aux rinçages.

On déplace l'ensemble des cuves sous l'action du moteur M4 pour amener la cuve Déchets du diluteur sous l'aiguille.

On descend l'aiguille dans la cuve de déchets grâce au moteur M3.

On commande les vannes EV4 et EV16, le moteur M3 remonte lentement l'aiguille. Puis par l'action du moteur M2, on pousse du diluant afin de rincer la partie externe de l'aiguille.

On coupe les vannes EV4 et EV15 et on contrôle que l'aiguille est totalement remontée. Le moteur M4 déplace l'ensemble de cuves et amène la cuve de dilution blancs sous l'aiguille.

On descend l'aiguille sous l'action du moteur M3 dans la cuve de dilution blancs.

On commande les électrovannes EV4 et EV15 et on actionne le moteur M2 pour amener une petite quantité de diluant dans la cuve de dilution blancs.

On coupe EV15 et on actionne le moteur M2 pour amener la quantité de diluant nécessaire au bon rapport de dilution dans la cuve de dilution blancs tout en assurant le mélange avec le tout le sang.

On remonte et on redescend l'aiguille de prélèvement grâce au moteur M3 pour assurer essuie-goutte et on repositionne l'aiguille de prélèvement pour aspiration au dessus de la cuve de dilution blancs.

On effectue comme précédemment un prélèvement mais cette fois-ci du sang prédilué, c'est-à-dire du sang qui se trouve dans la cuve de dilution blancs.

Le moteur M4 amène la cuve de dilution rouges sous l'aiguille de prélèvement.

Le moteur M3 descend l'aiguille de prélèvement dans la cuve de dilution rouges. On commande les électrovannes EV4 et EV15 et on actionne le moteur M2 pour rincer la partie externe de l'aiguille avec du diluant. On coupe EV4 et EV15 et on remonte l'aiguille de prélèvement par l'action du moteur M3 pour la dégager du sang. On descend et on remonte l'aiguille de prélèvement par l'action du moteur M3 pour assurer un essuie-goutte.

On commande EV10, EV11 et EV12 et on met en marche le moteur M1 pour aspirer le liquide à vidanger, qui se trouve dans la cuve dilutions rouges et on le transvase dans la chambre de mesure : on contrôle en permanence la dépression grâce au dispositif 44. On coupe EV11, on commande EV1 et on actionne le moteur M1 pour vidanger.

On coupe EV1 et on commande EV16 pour rétablir la pression atmosphérique dans cuve. On coupe EV10, EV11 et EV16.

On effectue alors la dilution des rouges de façon analogue à celle des blancs. On remonte ensuite l'aiguille de prélèvement.

On procède alors au comptage des rouges. On commande EV10, EV11 et EV12 et on aspire la dilution rouges, c'est-à-dire le liquide se trouvant dans la cuve de dilution rouges, et on la transvase dans la cuve de mesure : on contrôle en permanence la dépression grâce au dispositif 44.

On coupe des vannes EV10 et EV11, on commande EV16 et on actionne le moteur M1 pour ramener le piston de la pompe à air.

On coupe EV12 et EV16, on commande EV3 et on actionne le moteur M1 pour amorcer le transflux dans la chambre latérale : on contrôle la présence du transflux par le dispositif 43.

On coupe EV3 et on commande EV16 pour rétablir la pression atmosphérique.

On coupe EV16 et on actionne le moteur M1 pour créer une dépression dans la chambre latérale : on contrôle en permanence la dépression par le dispositif 44. On effectue alors un cycle de comptage électronique : programmation contrôlée de la tension de sonde, une acquisition du blanc hémoglobine et un comptage des plaquettes dans la durée programmée avec contrôle simultané de la tension de sonde et de la dépression. On actionne éventuellement le moteur M1 pour corriger la dépression On effectue un comptage des rouges dans la durée programmée en contrôlant simultanément la tension de sonde et la dépression.

On commande EV16 pour rétablir la pression atmosphérique et on actionne le moteur M1 pour prendre une quantité maximum d'air. On coupe EV16 et on commande EV10, EV12 et EV1 puis on actionne le moteur M1 pour repousser le liquide sur la sortie vidange. Simultanément, on actionne M2 pour aspirer la quantité de diluant nécessaire au rinçage de la cuve de mesure : on contrôle en permanence la présence du diluant par le dispositif 40. On coupe l'électrovanne EV1.

On effectue un cycle de rinçage.

On commande EV4 et on actionne le moteur M2 pour mettre du diluant dans cuve de dilution rouges.

On commande EV10 et EV11 puis on actionne le moteur M1 pour effectuer le transfert du liquide à rincer dans la chambre de mesure.

On coupe EV11, on commande EV1 et on actionne le moteur M1 pour repousser le liquide sur sortie de vidange.

On coupe toutes les électrovannes et les moteurs.

On effectue un comptage des blancs.

On commande EV9 et on actionne le moteur M2 pour prendre la quantité de lyse programmée en contrôlant en permanence la présence de lyse par le dispositif 42.

On coupe EV9, on commande EV7, EV10, EV11 et EV12. On actionne simultanément les moteur M2 pour repousser Lyse et M1 pour aspirer le liquide se trouvant dans la cuve de dilution blancs.

On coupure EV7, EV10 et EV11, on commande EV16 et on actionne le moteur M1 pour ramener le piston de la pompe à air.

On réalise le comptage des blancs de façon analogue à celle des rouges.

On effectue un cycle de comptage électronique : programmation contrôlée de la tension de sonde : comptage des blancs dans la durée programmée avec contrôle simultané de la tension de sonde et de la dépression, acquisition de la valeur hémoglobine. On commande EV16 pour rétablir la pression atmosphérique et on actionne le moteur M1 pour prendre une quantité maximale d'air.

On coupe EV16 et on commande EV10, EV12 et EV1 puis on actionne le moteur M1 pour refouler le liquide sur la sortie de vidange.

On coupe EV1.

## Revendications

1. Dispositif automatique compteur analyseur d'hématologie **caractérisé par** son organisation en trois ensembles : un ensemble de pompage comportant une pompe à air commandée par un moteur (M1) et trois pompes respectivement de lyse, de diluant et de prélèvement actionnées par le moteur (M2), un ensemble de dilution comportant trois cuves (2,3,4) respectivement de déchets, de blancs et de rouges et un ensemble de mesure comportant une chambre de mesure (21).

2. Dispositif selon la revendication 1, **caractérisé en ce que** ledit ensemble de mesure ne comporte qu'une seule chambre de mesure pour le comptage des rouges et des blancs.

3. Dispositif selon l'une quelconque des revendications précédentes, **caractérisé en ce qu'**une vanne permet d'utiliser de l'eau à la place d'un diluant isotonique.

## Patentansprüche

1. Automatische hämatologische Zähl- und Messvorrichtung, **gekennzeichnet durch** ihre Anordnung in drei Einheiten: einer Pumpeinheit, welche eine Luftpumpe, die von einem Motor (M 1) angesteuert wird, und drei Pumpen aufweist, die vom Motor (M2) angetrieben werden, nämlich je eine Lysepumpe, eine Verdünnungspumpe und eine Probenahmepumpe, einer Verdünnungseinheit, welche drei Küvetten (2, 3, 4) aufweist, nämlich je eine Küvette für Abfälle, für weiße und für rote Blutkörperchen , und einer Messeinheit, die einen Messraum (21) aufweist.

2. Vorrichtung nach Anspruch 1, **dadurch gekennzeichnet, daß** die Messeinheit nur eine einzige Messkammer zum Zählen der roten und der weißen Blutkörperchen aufweist.

3. Vorrichtung nach einem der vorstehenden Ansprüche, **dadurch gekennzeichnet, daß** ein Ventil es ermöglicht, anstelle von isotonischem Verdünnungsmittel Wasser zu verwenden.

## Claims

1. Automatic hematologic counting and analyzing device **characterized in that** it is arranged in three assemblies; a pumping assembly comprising an air pump driven by a motor (M1) and three pumps for lysis, diluent and sampling respectively actuated by the motor (M2), a diluting assembly comprising three containers (2,3,4) for waste material, for white corpuscles and for red corpuscles respectively, and a measuring assembly including a measuring chamber (21).

2. Device according to claim 1, **characterized in that** the said measuring assembly comprises a single measuring chamber for counting both the red corpuscles and the white corpuscles.

3. Device according to any one of the preceding claims, **characterized in that** a valve makes it possible to use water instead of an isotonic diluent.
